# EUROPÄISCHE PATENTSCHRIFT

(11) **EP 1 671 434 B1**
(45) Veröffentlichungstag und Bekanntmachung des Hinweises auf die Patenterteilung: **05.09.2007**
(21) Anmeldenummer: 04761053.0
(22) Anmeldetag: 30.09.2004
(51) Int. Cl.: H04B 10/158, H04B 10/10, H04B 10/22

(54) **INFRAROT (IR)-EMPFANGSEINRICHTUNG**
INFRARED (IR) RECEIVER DEVICE
DISPOSITIF DE RECEPTION INFRAROUGE

(30) Priorität: 08.10.2003 AT 15912003
(43) Veröffentlichungstag der Anmeldung: 21.06.2006
(73) Patentinhaber: Efkon AG, 8045 Graz (AT)
(72) Erfinder: RIEDER, Helmut, A-8010 Graz (AT); PAMMER, Raimund, (AT); BOH, Wolfgang, A-8045 Graz (AT); SCHALK, Andreas, A-8054 Graz (AT)
(74) Vertreter: Sonn & Partner Patentanwälte
(86) Internationale Anmeldenummer: PCT/AT2004/000331
(87) Internationale Veröffentlichungsnummer: WO 2005/034392

(56) Entgegenhaltungen:
- WO-A-00/42719
- US-A- 5 838 472
- US-B1- 6 486 994

## Beschreibung

Die Erfindung betrifft eine Infrarot (IR)-Empfangseinrichtung gemäß dem einleitenden Teil von Anspruch 1. Eine derartige IR-Empfangseinrichtung ist in US 6 486 994 B1 in Zusammenhang mit Computersystemen beschrieben.

In Verbindung mit Anlagen zur elektronischen Mautgebühreneinhebung, beispielsweise für die Benützung von gebührenpflichtigen Autobahnstrecken mit Kraftfahrzeugen, werden häufig ebenfalls IR-Übertragungseinrichtungen verwendet. Bei derartigen Anlagen ist es von Bedeutung, dass ein hohes Maß an Selektivität bei der Kommunikation zwischen kraftfahrzeugseitigen Sende- und Empfangseinrichtungen, den so genannten OBUs (OBU-On Board Unit), und den stationären Sende- und Empfangseinrichtungen gewährleistet wird, so dass eine IR-Kommunikation nur zwischen einander zugeordneten Kraftfahrzeugen, auf zugehörigen Fahrstreifen, und IR-Sende- und -Empfangseinrichtungen der stationären Anlage zustande kommt. Andererseits ist es auch ein Anliegen, dass die IR-Signale empfangsseitig sicher detektiert werden können, wobei im Falle des Aussendens und Empfangens von IR-Signalen im Freien erschwerend das Tageslicht als starkes Hintergrundlicht hinzu kommt. Dadurch ist der jeweiligen Übertragungsdistanz im Falle einer optischen Kommunikation eine Grenze gesetzt. Ganz allgemein gilt hier, dass die überbrückbare Distanz oder Reichweite von der Bestrahlungsstärke am Ort der Empfangseinrichtung und von der Empfindlichkeit der Empfangselemente abhängt. Die Empfindlichkeit der Empfangselemente, insbesondere Fotodioden, kann bei einer vorgegebenen Bestrahlungsstärke nur begrenzt erhöht werden, wobei der Grenzwert eben durch das zuvor bereits angesprochene Hintergrundlicht, insbesondere Sonnenschein im Freien, bestimmt wird. Zur Erhöhung der Empfindlichkeit der Empfangselemente wurde in der WO 99/03218 A bereits eine spezielle Schaltung der Empfangselemente vorgeschlagen, um das Signal/Rausch-Verhältnis zu erhöhen. Bei dieser Technologie wird jedoch eine große Anzahl von Stufen benötigt, wenn die Empfindlichkeitssteigerung einen bestimmten Wert übersteigen soll. Beispielsweise werden für die Steigerung der Empfindlichkeit um einen Faktor 10 einhundert Mal so viele Empfangselemente benötigt. Dadurch steigen die Kosten für eine solche Empfangseinrichtung unverhältnismäßig, so dass die Wirtschaftlichkeit nicht mehr gegeben ist. Außerdem führen große Detektorflächen auch zu einem Geschwindigkeitsverlust bei der Signalgewinnung.

Ein anderer Ansatz besteht darin, mit Hilfe von Sammellinsen an der Empfangseinrichtung die Bestrahlungsstärke zu erhöhen. Die dabei erzielbare optische Verstärkung des Nutzsignals entspricht ungefähr dem Verhältnis von aktiver Linsenfläche zu aktiver Detektorfläche. Das diffuse Hintergrundlicht wird hingegen nicht in vergleichbarer Weise auf der Detektorfläche konzentriert. Dadurch kann die Empfindlichkeit des Empfängers nicht unwesentlich vergrößert werden. Nachteilig ist hierbei jedoch die gegebene Einschränkung des Beobachtungsfeldes, der so genannten Kommunikationszone, wobei sich als Kommunikationszone beispielsweise nur mehr ein kleiner Teilbereich einer Fahrspur ergiebt. Dies ist häufig unerwünscht bzw. unzulässig.

Es ist nun Aufgabe der Erfindung, eine IR-Empfangseinrichtung wie eingangs angegeben vorzusehen, bei der die Empfangs-Empfindlichkeit mit einfachen Maßnahmen und ohne Beschränkung der Kommunikationszone wesentlich erhöht werden kann.

Zur Lösung der erfindungsgemäß gestellten Aufgabe sieht die Erfindung eine IR-Empfangseinrichtung wie in Anspruch 1 definiert vor. Vorteilhafte Ausführungsformen und Weiterbildungen sind in den abhängigen Ansprüchen gekennzeichnet.

Der Erfindung liegt die Erkenntnis zugrunde, dass die Empfangs-Empfindlichkeit durch eine spezifische Ausbildung und Anordnung der optischen Detektorelemente in Kombination mit einer spezifischen, daran angepassten Schaltungstechnik wesentlich erhöht werden kann. Dabei kann mit den angesprochenen einfachen technischen Maßnahmen im Bereich der optischen Detektorelemente ebenso wie der elektronischen Verarbeitungsschaltung problemlos eine 10-20-fache Empfindlichkeit erzielt werden, was andererseits ausgenützt werden kann, um die optische Kommunikation auf beispielsweise viermal so große Entfernungen, mit den selben Sende- und Empfangselementen, zu bewältigen. Bei der vorliegenden Technik wird dabei die zu beobachtende Kommunikationszone mit Hilfe der optischen Detektorelemente "kachelförmig" in kleine Bereiche, d.h. Segmente, unterteilt. Als optische Abbildungselemente werden beispielsweise Sammellinsen verwendet, welche das optische Nutzsignal einschließlich Hintergrundlicht auf das jeweilige IR-Detektorelement, also insbesondere eine Fotodiode, konzentrieren. Die Anordnung der IR-Detektorelemente wird dabei so getroffen, dass ein Signal von einer beliebigen Stelle aus der Kommunikationszone immer von mindestens einem der IR-Detektorelemente erfasst wird. Von Bedeutung ist sodann, dass auf elektronische Weise von allen Detektorelement-Signalen jenes für die weitere Verarbeitung und Auswertung ausgewählt wird, das eine momentane maximale Amplitude, verglichen mit allen anderen Detektorelemente-Signalen, aufweist. Nur dieses maximale Signal wird der Auswertung zugeführt, hingegen werden alle kleineren Signale unterdrückt. Dadurch wird sichergestellt, dass jeweils jenes Signal, das das höchste Signal/Rausch-Verhältnis aufweist, zur Auswertung herangezogen wird. Würde hingegen durch die Verarbeitungsschaltung der Mittelwert aller am Eingang anliegenden Signale gebildet werden, so würde das Nutzsignal vergleichsweise abgeschwächt werden. Dies ist einleuchtend, wenn man berücksichtigt, dass das optische Nutzsignal in der Regel nur an einem oder einigen wenigen Empfangselementen anliegt.

Für die Gewinnung des elektrischen Signals, d.h. insbesondere von entsprechenden elektrischen Impulsen, ist an die IR-Detektorelemente eine Schwellenwertbildungseinheit angeschlossen, deren Ausgang mit einem Eingang eines Komparators verbunden ist, an dessen anderen Eingang das jeweilige maximale IR-Detektorelement-Ausgangssignal gelegt ist. Es wird also der jeweilige momentane Maximalwert an den Komparator angelegt; aus diesem Maximalwert wird weiters parallel dazu ein passender Schwellenwert hergeleitet, der ebenfalls an den Komparator angelegt wird. Ein Maximal- bzw. Minimalwert der Schwelle kann durch ein Widerstandsnetzwerk bestimmt werden, und der Schwellenwert kann einer steigenden Flanke des anliegenden Signals bis zum vorstehend erwähnten Maximalwert folgen. Beim Abfallen des Schwellenwerts wird die Abfallzeit beispielsweise durch die Zeitkonstante eines zur Schwellenwertbildungseinheit gehörenden RC-Gliedes bestimmt. Auf diese Weise kann eine dynamische Anpassung der Schwelle an das jeweilige Signal erzielt werden, wodurch in der Folge eine verbesserte Rauschunterdrückung erzielt wird, und die Ausgangsimpulse des Komparators weisen weiters unabhängig vom Pegel des Empfangssignals eine gleichmäßige Amplitude auf, so dass ein qualitativ ausgezeichnetes Datensignal erhalten wird, das der entsprechenden Auswertung bzw. Dekodierung zugeführt wird.

Zum Selektieren des maximalen Ausgangssignals ist jedem IR-Detektorelement zumindest eine Diode nachgeschaltet, wobei diese Dioden, gegebenenfalls gruppenweise, mit ihren von den IR-Detektorelementen abgewandten Seiten, z.B. ihren Kathoden, zusammengeschaltet sind. Dadurch wird eine schaltungstechnisch besonders einfache Realisierung der Maximalwert-Selektion ermöglicht. Es ist hier weiters von Vorteil, wenn die Dioden bzw. die Dioden einer Gruppe mit einem gemeinsamen Widerstand verbunden sind, von dem das jeweilige maximale IR-Detektorelement-Ausgangssignal abgegriffen und dem anderen Eingang des Komparators zugeführt wird. Auch ist es schaltungstechnisch günstig, wenn den IR-Detektorelementen nachgeschaltete Dioden einer anderen Gruppe mit der Schwellenwertbildungseinheit verbunden sind.

Bei der Aufteilung der Kommunikationszone, die überwacht oder beobachtet wird, auf mehrere Detektorelemente (auch Empfangselemente genannt) ergeben sich unter Umständen insofern Probleme, als bei herkömmlichen Infrarot-Empfangselementen, wie Fotodioden, aktive Flächenbereiche vorliegen, die sich nicht über die gesamte Oberseite erstrecken, so dass sich tote Zonen ergeben, wenn man diese Detektorelemente unmittelbar aneinander reiht. Dies bedeutet umgekehrt, dass nicht die gesamte zu beobachtende Kommunikationszone lückenlos auf die Detektorelemente abgebildet werden könnte, sondern dass - wenn umgekehrt die Projektion der Detektorelemente auf die Kommunikationszone betrachtet wird - dort Zwischenbereiche - eben tote Zonen - vorliegen, aus denen kein IR-Signal empfangen werden kann. Um hier Abhilfe zu schaffen, ist erfindungsgemäß mit besonderem Vorteil vorgesehen, dass zumindest zwei matrixartige IR-Detektorelemente-Anordnungen vorhanden sind, wobei die Positionen der IR-Detektorelemente von Anordnung zu Anordnung gegeneinander versetzt sind. Es liegen somit zwei räumlich voneinander getrennte matrixartige IR-Detektorelemente-Anordnungen vor, wobei die IR-Detektorelemente in den einzelnen Anordnungen relativ zueinander versetzt sind, und zwar insbesondere in einem Versetzungsmaß entsprechend der Größe der aktiven Zonen bzw. der nichtaktiven Zwischenzonen. Sofern mit zwei solchen Gruppen von IR-Detektorelementen in einer Matrixform noch keine flächendeckende Empfangs-Anordnung gebildet werden kann, können auch mehr als zwei Anordnungen, z.B. drei, vier oder sechs Anordnungen, vorgesehen werden. Auf diese Weise wird eine gegebenenfalls sogar überlappende, jedenfalls unterbrechungsfreie "Kachel"-Anordnung erzielt.

Andererseits ist es, bei Vorliegen von entsprechenden IR-Detektorelementen, mit die gesamte Ober- oder Vorderseite einnehmenden aktiven Flächen, von Vorteil, wenn die IR-Detektorelemente in einer schachbrettartigen Anordnung, mit ihren aktiven Detektorflächen im Wesentlichen nahtlos aneinander anschließend, vorhanden sind. Bei dieser Ausführungsform kann daher mit bloß einer einzigen Gruppe oder Anordnung von IR-Detektorelementen das Auslangen gefunden werden.

Um die Kommunikationszone auf die (bzw. die jeweilige) IR-Detektorelemente-Anordnung konzentriert abzubilden, ist beispielsweise eine Abbildungslinse (Sammellinse) den IR-Detektorelementen (jeweils) vorgeordnet. Dabei kann im Fall von mehreren Gruppen von IR-Detektorelementen eine solche Abbildungslinse die beobachtete Kommunikationszone auf eine Gruppe von IR-Detektorelementen abbilden, und eine zweite Linse kann zur Abbildung der Kommunikationszone auf eine zweite Gruppe von IR-Detektorelementen vorgesehen sein usw..

Zum Anlegen eines Schwellenwertsignals mit geeignetem Pegel an dem einen Eingang des Komparators ist es auch vorteilhaft, wenn die Schwellenwertbildungseinheit einfach einen Spannungsteiler aufweist, von dem die Schwellenwertspannung dem einen Eingang des Komparators zugeführt wird.

Die Erfindung wird nachfolgend anhand von in der Zeichnung veranschaulichten, bevorzugten Ausführungsbeispielen, auf die sie jedoch nicht beschränkt sein soll, noch weiter erläutert. Im Einzelnen zeigen in der Zeichnung:
Fig. 1 schematisch eine Anordnung von IR-Empfangselementen mit zugeordneter Abbildungslinse zur Veranschaulichung der Segmentierung einer mit einem Kraftfahrzeug symbolisch angedeuteten Kommunikationszone;
Fig. 2 in einem schematischen optischen Strahlenverlauf die Segmentierung von Empfangseinrichtung und Kommunkationszone;
Fig. 3 ein Blockschaltbild einer IR-Empfangseinrichtung;
Fig. 4 eine gegenüber Fig. 3 etwas modifizierte IR-Empfangseinrichtung in einem Blockschaltbild;
Fig. 5 in Teilfiguren 5A bis 5D Signalverläufe an verschiedenen Schaltungspunkten der Empfangseinrichtung gemäß Fig. 4;
Fig. 6 noch eine andere Ausführungsform der Empfangseinrichtung in einem Blockschaltbild;
Fig. 7 in einer schematischen Darstellung ähnlich Fig. 1 die Segmentierung der Empfangszone unter Verwendung von zwei Detektorelemente-Anordnungen;
Fig. 7A eine Draufsicht auf ein übliches Detektorelement, zur Veranschaulichung von aktiven Flächen und nichtaktiven Flächen im Verhältnis zueinander;
Fig. 8 eine Anordnung von 2 x 4 derartigen Detektorelementen, zur Veranschaulichung insbesondere der verhältnismäßig großen nichtaktiven Flächen zwischen den aktiven Detektorflächen; und
Fig. 9 schematisch mehrere Gruppen von solchen IR-Detektorelementen jeweils in einer matrixartigen Anordnung, mit einem Versatz zwischen den Detektorelementen der einzelnen Gruppen, um so eine möglichst unterbrechungsfreie oder sogar mit Überlappungszonen ausgebildete Abbildungs- oder Projektionsfläche an der Empfangseinrichtung sicherzustellen.

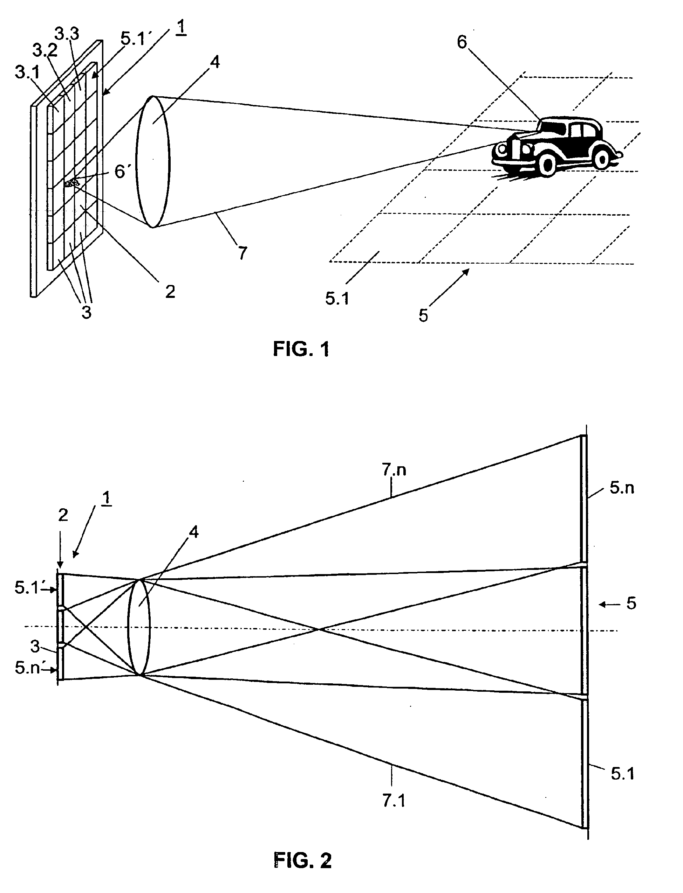

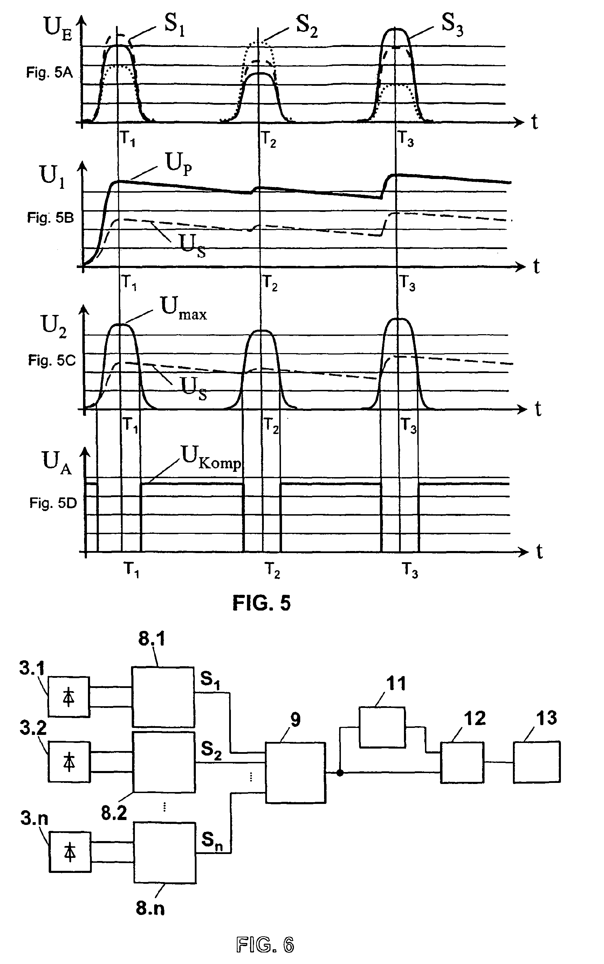

In Fig. 1 ist schematisch ein Teil einer IR-Empfangseinrichtung 1 veranschaulicht, die in einer matrixartigen Anordnung 2 eine Anzahl von IR-Detektorelementen 3, hier in Reihen und Spalten unmittelbar aneinander anschließend, aufweist. Der Detektorelemente-Anordnung 2 ist ein nur schematisch gezeigtes Abbildungselement 4, z.B. eine konvexe Linse, zur optischen Abbildung einer Kommunikationszone 5 zugeordnet. Diese Kommunikationszone 5 kann beispielsweise ein Bereich einer mautpflichtigen Fahrstraße, ein Fahrstreifen einer mautpflichtigen Autobahn, aber auch ein gebührenpflichtiger Parkplatz sein, wobei Kraftfahrzeuge, wie das in Fig. 1 schematisch gezeigte Kraftfahrzeug 6, die mit herkömmlichen Kommunikationseinrichtungen, so genannten OBUs (OBU-On Board Unit) ausgerüstet sind, in Kommunikation mit einer stationären Sende- und Empfangseinrichtung treten, die in Fig. 1 - abgesehen von der Empfangseinrichtung 1 - nicht näher dargestellt ist, die jedoch als solche im Stand der Technik hinlänglich bekannt ist. Insbesondere liegt im vorliegenden Fall eine IR-Kommunikation zugrunde, und in Fig. 1 ist beispielhaft ein von der OBU im Kraftfahrzeug 6 ausgehender IR-Strahl 7 veranschaulicht, der über die Abbildungslinse 4 eine der Position des Kraftfahrzeuges 6 in der Kommunikationszone 5 entsprechende Abbildung 6' auf der Matrix-Anordnung 2 von Detektorelementen 3 erzeugt. Die rasterförmige oder matrixartige Anordnung 2 der Detektor- oder Empfangselemente 3 entspricht, was die Abbildung der Kommunikationszone 5 betrifft, einer entsprechenden matrixartigen oder schachbrettartigen Einteilung dieser Kommunikationszone 5, so dass "Kacheln", z.B. 5.1, in der zu beobachtenden Kommunikationszone 5 imaginär definiert sind, denen entsprechende rechteckige Empfangselementflächen, z.B. 5.1', in der Detektorelemente-Anordnung 2 entsprechen. Es ergibt sich somit eine Segmentierung der Kommunkationszone 5 in Entsprechung zur Segmentierung der Detektorflächen oder matrixartigen Detektorelemente-Anordnung 2 der Empfangseinrichtung 1, wobei ein aus der Kommunikationszone 5 ankommender Strahl 7 eine Abbildung auf einem einzelnen Empfangselement 3 oder einigen wenigen benachbarten Empfangselementen 3 erzeugt. Dadurch, dass sich die sendenden Objekte, nämlich Kraftfahrzeuge 6, bewegen, wandert diese Abbildung, z.B. 6' in Fig. 1, über die IR-Detektorelemente-Anordnung 2, wobei immer ein Empfangselement 3 existiert, das eine maximale Bestrahlungsstärke erfährt und somit ein maximales elektrisches Signal abgibt.

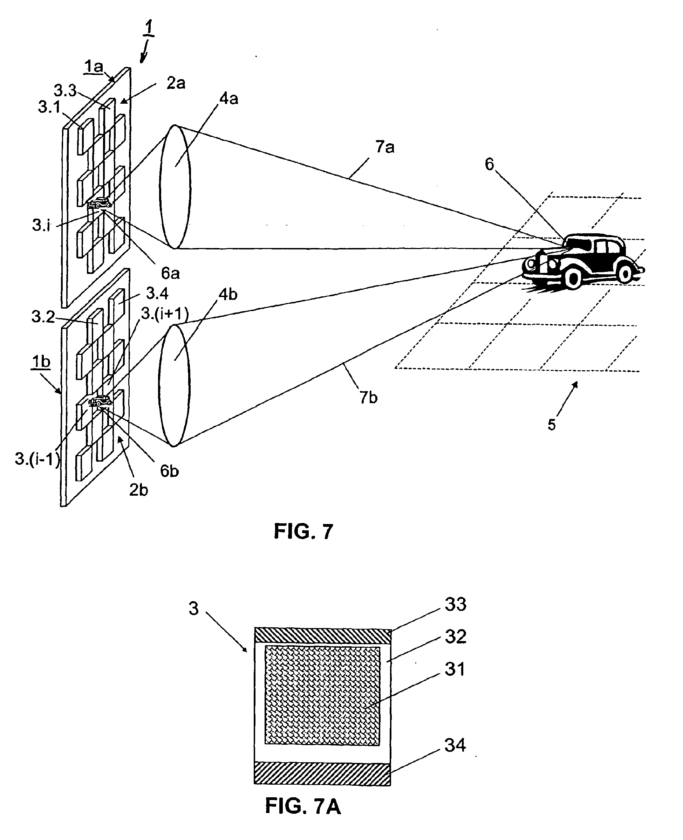

In Fig. 1 ist wie erwähnt eine Anordnung 2 von nahtlos aneinander anschließenden aktiven IR-Detektorelementen 3 veranschaulicht, was einer idealen Segmentierung mit einer einzigen Gruppe von Detektorelementen 3 entspricht, wobei eine derartige ideale Anordnung allerdings nicht immer möglich ist, wie nachstehend noch näher anhand der Fig. 7 bis 9 erläutert werden wird. In einem solchen Fall, wo nichtaktive Zonen zwischen den aktiven Flächen von IR-Detektorelementen 3 vorliegen, werden zwei oder mehr Gruppen oder Anordnungen 2 von IR-Detektorelementen vorgesehen, wie weiter unten näher erläutert werden wird.

In Fig. 2 ist nochmals schematisch in einer Ansicht die Zuordnung einer segmentierten Kommunikationszone 5 mit ihren einzelnen Segmenten, z.B. 5.1... 5.n, zu einer IR-Detektorelemente-Anordnung 2 über ein abbildendes Objekt 4, insbesondere eine Sammellinse, veranschaulicht, wobei ein IR-Detektorelement 3 (oder aber eine Anzahl von solchen IR-Detektorelementen 3) das dem Segment 5.1 etc. entsprechende Segment 5.1'... 5.n' bildet. In Fig. 2 sind dabei auch entsprechende IR-Strahlen 7.1 bzw. 7.n (die das Abbildungssegment 5.n' des Kommunikationszonen-Segments 5.n erzeugen) veranschaulicht.

Wie erwähnt führt die vorstehend beschriebene Segmentierung dazu, dass jeweils ein IR-Detektorelement 3 zu einem gegebenen Zeitpunkt ein maximales Ausgangssignal liefert, und dieses jeweilige maximale Ausgangssignal wird zur weiteren Signalverarbeitung verwendet, wogegen die anderen Ausgangssignale, d.h. die Signale der übrigen IR-Detektorelemente, unterdrückt werden. Dadurch liegt jeweils ein optimales Signal, mit einem maximalen SNR-Verhältnis, vor, so dass die Empfindlichkeit der Empfangseinrichtung 1 erhöht wird, was umgekehrt wiederum bedeutet, dass über wesentlich größere Distanzen eine IR-Kommunikation mit vergleichbaren IR-Sende- bzw. -Empfangselementen ermöglicht wird.

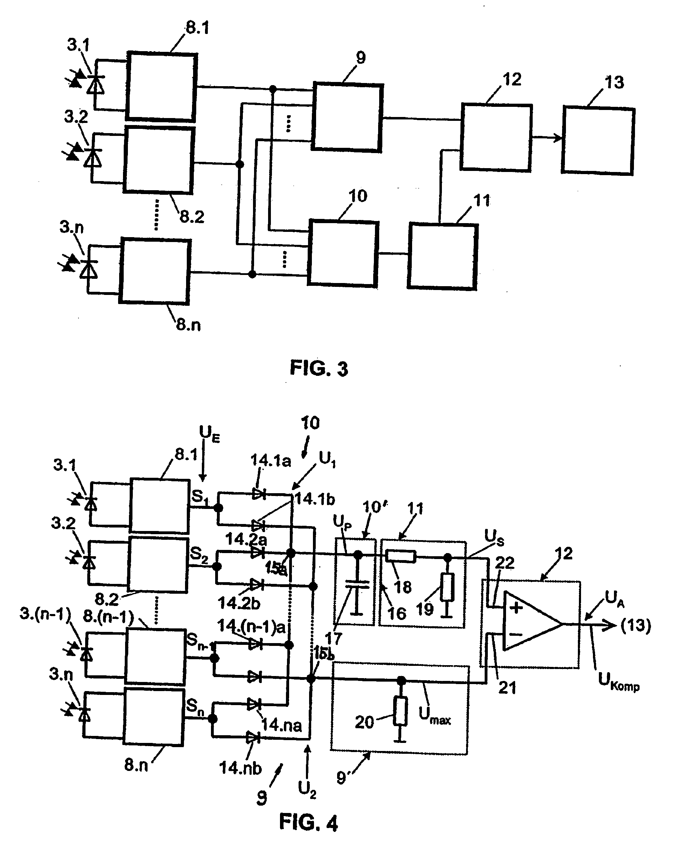

Fig. 3 zeigt nun in einem Blockschaltbild eine Verarbeitungsschaltung, mit der das jeweils maximale Ausgangssignal selektiert und einer Auswertung zugeführt werden kann.

Im Einzelnen sind n IR-Detektorelemente 3.1, 3.2... 3.n, etwa in Form von Pindioden oder Fotodioden, veranschaulicht, denen jeweils ein eigener Verstärker 8.1, 8.2... 8.n nachgeschaltet ist. Die Ausgänge dieser Verstärker 8.1, 8.2... 8.n sind in Parallelschaltung mit Eingängen einerseits eines Maximalwertdetektors 9 und andererseits eines Spitzenwertdetektors 10 verbunden. Dem Spitzenwertdetektor 10 ist eine Schwellenwertbildungseinheit 11 nachgeschaltet. Die Ausgänge der Schwellenwertbildungseinheit 11 sowie des Maximalwertdetektors 9 sind mit Eingängen eines Komparators 12 verbunden, der eine Impulsbildnereinheit darstellt und nur den jeweils maximalen Ausgangsimpuls 9, der vom Maximalwertdetektor angelegt wird, und dessen Amplitude (betragsmäßig) über dem Schwellenwert der Schwellenwertbildungseinheit 11 liegt, zugeführt erhält und darauf unter Abgabe eines Impulssignales an eine weitere Auswerteinheit 13 anspricht. Die Auswerteinheit 13 kann dann in an sich herkömmlicher Weise die zugeführten Impulssignale oder Datensignale dekodieren, und eine weitere Erläuterung hievon kann sich hier erübrigen.

In Fig. 4 ist mehr im Detail eine Verarbeitungsschaltung mit Selektion des jeweils maximalen Ausgangssignals eines IR-Detektorelementes 3.1, 3.2... 3.(n-1), 3.n (wie erwähnt z.B. einer Fotodiode oder Pindiode) veranschaulicht; dabei sind den jeweiligen IR-Detektorelementen 3.i Verstärker 8.1... (allgemein 8.i) nachgeschaltet, welchen wiederum jeweils zwei Dioden 14.1a, 14.1b, 14.2a, 14.2b... 19.(n-1)a, 14.(n-1)b, 14.na, 14.nb (allgemein 14.ia, 14.ib) in Parallelschaltung nachgeordnet sind, wobei beispielsweise die Anoden dieser Dioden 14.i jeweils mit dem Ausgang des zugehörigen Verstärkers 8.i verbunden sind; dagegen sind die anderen Seiten der Dioden 14.i, also beispielsweise die Kathoden, gruppenweise jeweils in einem gemeinsamen Schaltungspunkt 15a bzw. 15b zusammengeführt, wobei an den einen Schaltungspunkt 15b eine Maximalwertschaltung 9' des Maximalwertdetektors 9 und an den anderen Schaltungspunkt 15a eine Spitzenwertschaltung 10' des Spitzenwertdetektors 10 und Schwellenwertbildungseinheit 11 angeschlossen sind. Im Einzelnen liegt beispielsweise in dem für die Schwellenwertbildung vorgesehenen Zweig ein RC-Glied 16 mit einem Quer-Kondensator 17 und einem Längs-Widerstand 18 vor, wobei der Widerstand 18 zugleich Teil eines Spannungsteilers mit einem weiteren Widerstand 19 ist. Im anderen Signalzweig befindet sich beispielsweise ein Widerstand 20, der zum Abgreifen des jeweiligen maximalen Signals, zwecks Zuführung zum einen Eingang 21 des Komparators 12, liegt. Dem anderen Eingang 22 des Komparators 12 wird hingegen das im Spannungsteiler 18, 19 gebildete Spannungssignal, nämlich der Schwellenwert, zugeführt.

In Fig. 5 sind schematisch einzelne Spannungspegel in vier Zeilen oder Diagrammen, Fig. 5A, 5B, 5C und 5D, für allgemein mit U_{E}, U₁, U₂ und U_{A} bezeichnete Spannungen dargestellt. Dabei ist mit U_{E} der Spannungspegel der einzelnen IR-Detektorelemente 3.i nach Verstärkung im jeweils zugehörigen Verstärker 8.i veranschaulicht, wobei im Einzelnen in Fig. 5A als Ausgangssignale dieser IR-Detektorelemente 3 Spannungspegel S₁, S₂ und S₃ veranschaulicht sind. Diese Spannungspegel S₁ bis S₃ treten impulsförmig zu vorgegebenen Zeiten auf, entsprechend der Frequenz der IR-Signale, wie sie von der OBU eines Kraftfahrzeuges 6 gesendet werden; aufgrund der Position und der Bewegung des sendenden Objekts (Kraftfahrzeuge 6) ändern sich die Empfangspegel von Puls zu Puls, d.h. die Empfangspegel S₁, S₂, S₃ können von Puls zu Puls verschieden groß sein, wie das in Fig. 5A veranschaulicht ist. Beispielsweise ist zum Zeitpunkt T₁ der Empfangspegel S₁ des ersten IR-Detektorelementes 3.1 am größten, zum Zeitpunkt T₂ der Empfangspegel S₂ des zweiten Detektorelementes 3.2 und zum Zeitpunkt T₃ der Empfangspegel S₃ des dritten Detektorelementes 3.3.

In Fig. 5B ist als Spannung U₁ der Spannungsverlauf des Spitzenwertes Up am Kondensator 17 gemäß Fig. 4 gezeigt, wobei die Ladung am Kondensator 17 zu jedem Puls-Zeitpunkt T₁, T₂, T₃ etc. steigt und danach über die Widerstände 18, 19 reduziert wird. Am Spannungsteiler 18, 19 wird dann die gegenüber dem Spitzenwert U_{P} entsprechend verringerte Schwellenwertspannung Uₛ erhalten, die an den Eingang 22 des Komparators 12 gelegt wird, und die auch in Fig. 5C gezeigt ist.

In Fig. 5C ist die Spannung im anderen Signalzweig, nämlich die jeweils maximal auftretende Spannung Uₘₐₓ (also zum Zeitpunkt T₁ das Signal S₁, zum Zeitpunkt T₂ das Signal S₂ und zum Zeitpunkt T₃ das Signal S₃) gezeigt, wie es am Widerstand 20 liegt und dem anderen Eingang 21 des Komparators 12 zugeführt wird. Dabei ist auch wie erwähnt zur besseren Veranschaulichung in Fig. 5C die Schwellenwertspannung U_{S} eingezeichnet, und es ergibt sich hieraus unmittelbar der Impulsverlauf gemäß Fig. 5D, also das Ausgangssignal Uₖₒₘₚ des Komparators, das zugleich das Ausgangssignal U_{A} der beschriebenen Verarbeitungsschaltung gemäß Fig. 4 ist, welches sodann der anhand der Fig. 3 erwähnten Auswerteinheit 13 zugeführt wird.

Es werden auf diese Weise eindeutige, digitale Impulssignale erhalten, wobei ein großer Rauschabstand erzielt wird, da immer das maximale Detektorelement-Ausgangssignal (und nur dieses) verarbeitet wird. Im Weiteren ist auch von Vorteil, dass der jeweilige Schwellenwertpegel dynamisch an das Empfangssignal angepasst wird, wodurch die Rauschunterdrückung erhöht werden kann. Die Ausgangsimpulse des Komparators 12 weisen unabhängig vom Empfangspegel des Empfangssignals gleichmäßige Impulse auf.

In Fig. 6 ist eine Verallgemeinerung der Verarbeitungsschaltung gemäß Fig. 4 veranschaulicht, wobei ersichtlich ist, dass die Ausgangssignale der optischen Detektorelemente 3.i nach Verstärkung in den zugehörigen Verstärkern 8.i als Signale S.i (konkret S.1, S.2... S.n) parallel an einen Maximalwertdetektor 9 gelegt werden, dessen Ausgangssignal einerseits direkt einem Eingang des Komparators 12 und andererseits einer Schwellenwertbildungseinheit 11 zugeführt wird; der erhaltene Schwellenwertpegel wird dem anderen Eingang des Komparators 12 zugeführt, um so die digitalen Signale gemäß Fig. 5D wie zuvor beschrieben für eine Auswertung in einer Auswerteeinheit 13 zu erhalten.

Vorstehend wurde bereits erwähnt, dass die IR-Detektorelemente 3 zumeist nicht nahtlos aneinander gefügt werden können, wie dies in Fig. 1 dargestellt ist, sondern dass dann, wenn sie in Reihen und Spalten direkt aneinander gesetzt werden, zumindest in einer Richtung Abstände zwischen den aktiven Flächen gegeben sind, durch die in der Kommunikationszone 5 tote Zonen entstehen, d.h.

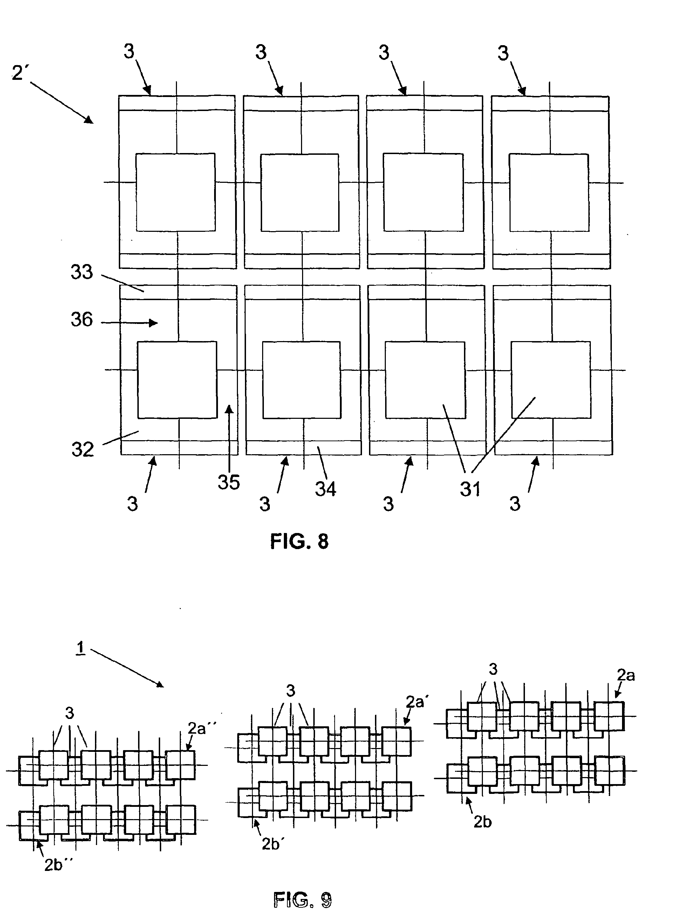

Zonen, die, wenn aus ihnen ein IR-Signal (IR-Strahl 7 in Fig. 1) abgestrahlt wird, zu keinem oder keinem adäquaten Empfang an der Empfangseinrichtung 1 mit den IR-Detektorelementen 3 führen. Dies ist in Fig. 7, 7A und 8 näher veranschaulicht, wobei aus Fig. 7 beispielsweise ersichtlich ist, dass zwei IR-Detektorelemente-Anordnungen 2a und 2b übereinander (gegebenenfalls auch nebeneinander) angeordnet sind, in denen die Detektorelemente 3.i zu den Detektorelementen 3.i der jeweils anderen Anordnung versetzt sind. Beispielhaft ist hier nur ein Abstand zwischen den aktiven Flächen in horizontaler Richtung angenommen, und die Detektorelemente 3.i sind nun auf die beiden Anordnungen oder Gruppen 1a, 1b so verteilt, dass insgesamt wieder eine fugenlose Abbildung der Kommunikationszone 5 erzielt wird. Dies kann auch bei einem Vergleich der Fig. 7 mit Fig. 1 so erläutert werden, dass das oberste erste Detektorelement 3.1 in der oberen Anordnung 2a, das nächste Detektorelement 3.2 in der obersten Reihe dann in der unteren Anordnung 2b von Fig. 7, das dritte Detektorelement 3.3 wieder in der oberen Anordnung 2a, das vierte Detektorelement 3.4 wieder in der unteren Anordnung 2b usw. vorgesehen ist. Es ergibt sich somit ein Versatz der Detektorelemente 3.1, 3.3 usw. bzw. 3.2, 3.4 usw. in den beiden Anordnungen oder Gruppen 2a und 2b zueinander, und würde man die beiden Anordnungen 1a, 1b so übereinander schieben, dass die Flächen der Detektorelemente 3 in einer Ebene liegen, so würde wiederum eine nahtlose Aneinanderreihung der Detektorelemente 3 bzw. sogar eine Überlappung derselben erhalten werden. Dies entspricht daher einer fugenlosen Abbildung aller Zonen oder Segmente 5.i der Kommunikationszone 5 auf die Empfangseinrichtung 1. Für diese Abbildung sind wiederum beispielsweise konvexe Abbildungslinsen 4a und 4b vorhanden, um die auf sie auftreffenden "Teilstrahlen" 7a, 7b, die sich aus dem von der OBU des Kraftfahrzeuges 6 ausgesendeten IR-Strahl ergeben, auf die jeweils zugehörige Detektorelement-Anordnung 2a bzw. 2b zu fokussieren. Wie dabei in Fig. 7 ersichtlich ist, wird beispielsweise eine Abbildung 6a auf einem mittigen Detektorelement 3.i an der oberen Anordnung 2a erhalten, wogegen die entsprechende Abbildung 6b in der unteren Anordnung 2b in den Zwischenraum zwischen die dazu "versetzten" Detektorelemente 3.(i-1) und 3.(i+1) fällt. Die in der oberen Anordnung 1a auf dem Detektorelement 3.i zustande kommende Abbildung 6a führt zum zu detektierenden maximalen Ausgangssignal.

In Fig. 7A ist in Draufsicht ersichtlich, wie in der Praxis ein IR-Detektorelement 3 ausgebildet sein kann, und wie dabei die nichtaktiven Bereiche zustande kommen. Das IR-Detektorelement 3 hat eine ungefähr quadratische aktive Empfangsfläche 31 auf einem Substrat 32, und an zwei einander gegenüberliegenden Längsrändern liegen Lötpads 33 bzw. 34 vor, die die Anode bzw. Kathode der das IR-Detektorelement 3 bildenden Fotodiode sind. Wenn derartige Fotodioden bzw. Detektorelemente 3 matrixartig angeordnet werden, wie gemäß der Anordnung 2' in Fig. 8, so ergibt sich, dass zwischen den aktiven Flächen 31 benachbarter Empfangs- oder Detektorelemente 3 sowohl in Reihenrichtung als auch in Spaltenrichtung inaktive Zonen 35, 36 erhalten werden, die in entsprechender Weise zu toten Zonen in der beobachteten Kommunikationszone 5 (s. Fig. 1) führen.

Um dem entgegen zu wirken, werden eben mehrere Anordnungen 2a, 2b, wie in Fig. 7 grundsätzlich dargestellt, untereinander oder nebeneinander angeordnet, um so die Kommunikationszone 5 komplett, d.h. ohne tote Zonen, abbilden zu können.

Es sei erwähnt, dass die Detektorelemente-Anordnungen 2a, 2b insgesamt jeweils relativ kleine Abmessungen aufweisen und so auch im Fall von mehreren Anordnungen 2a, 2b... übereinander und nebeneinander der vom jeweiligen sendenden Objekt, insbesondere der OBU eines Kraftfahrzeuges 6, ausgesendete IR-Lichtkegel an der Auftrefffläche der Empfangseinrichtung 1 bereits genügend weit aufgefächert ist (z.B. auf einen Durchmesser von einem halben Meter oder einem Meter), so dass mehrere derartige Detektorelemente-Anordnungen 2a, 2b von ein und demselben IR-Lichtkegel getroffen werden.

In Fig. 9 sind schematisch 3 x 2 derartige Anordnungen von Detektorelementen 3 veranschaulicht, wobei jeweils zwei Anordnungen 2a, 2b ähnlich jener von Fig. 7 bereits (theoretisch) ineinander geschoben veranschaulicht sind und insgesamt somit Detektorelemente-Anordnungen 2a, 2a' und 2a" (mit je 2 x 4 Detektorelementen 3) sowie weiters "darunter befindliche" Detektorelemente-Anordnungen 2b, 2b' und 2b" im Endeffekt so ineinander und übereinander zu denken sind, dass insgesamt eine einheitliche Fläche von Detektorelementen 3 erhalten wird; auf diese Weise wird das sendende Objekt (Kraftfahrzeug 6) immer mit einer maximalen Bestrahlungsstärke und demgemäß mit einem maximalen Ausgangssignal auf einem der Detektorelemente 3 der Anordnungen 2a bis 2b" abgebildet.

## Patentansprüche

1. Infrarot (IR)-Empfangseinrichtung mit IR-Detektorelementen (3) zum Empfang von IR-Signalen aus einer Kommunikationszone (5) sowie einer Verarbeitungsschaltung zur Herleitung von, den empfangenen IR-Signalen entsprechenden elektrischen Signalen, wobei die IR-Detektorelemente (3) in zumindest einer matrixartigen Anordnung (2), die einer matrixartigen Segmentierung der Kommunikationszone (5) entspricht, angeordnet sind und die Verarbeitungsschaltung eine an die IR-Detektorelemente (3) angeschlossene Maximalwertdetektorschaltung (9) aufweist, die von den Ausgangssignalen der IR-Detektorelemente (3) ein jeweils maximales Ausgangssignal für die Herleitung des elektrischen Signals selektiert, **dadurch gekennzeichnet, dass** an die IR-Detektorelemente (3) eine Schwellenwertbildungseinheit (11) angeschlossen ist, deren Ausgang mit einem Eingang (22) eines Komparators (12) verbunden ist, an dessen anderen Eingang (21) das jeweilige maximale IR-Detektorelement-Ausgangssignal gelegt ist, und dass jedem IR-Detektorelement (3.i) zum Selektieren des maximalen Ausgangssignals zumindest eine Diode (14.ib) nachgeschaltet ist, wobei diese den IR-Detektorelementen (3.i) nachgeschalteten Dioden (14.ib) mit ihren von den IR-Detektorelementen (3.i) abgewandten Seiten zusammengeschaltet (15b) sind.

2. Empfangseinrichtung nach Anspruch 1, **dadurch gekennzeichnet, dass** zumindest zwei matrixartige IR-Detektorelemente-Anordnungen (2a, 2b) vorhanden sind, wobei die Positionen der IR-Detektorelemente (3) von Anordnung zu Anordnung gegeneinander versetzt sind.

3. Empfangseinrichtung nach Anpruch 1, **dadurch gekennzeichnet, dass** die IR-Detektorelemente (3) in einer schachbrettartigen Anordnung, mit ihren aktiven Detektorflächen im Wesentlichen nahtlos aneinander anschließend, vorhanden sind.

4. Empfangseinrichtung nach einem der Ansprüche 1 bis 3, **dadurch gekennzeichnet, dass** vor der bzw. jeder IR-Detektorelemente-Anordnung (2) eine gemeinsame Abbildungslinse (4) angeordnet ist.

5. Empfangseinrichtung nach einem der Ansprüche 1 bis 4, **dadurch gekennzeichnet, dass** die Dioden bzw. die Dioden (14.ib) einer Gruppe mit einem gemeinsamen Widerstand (20) verbunden sind, von dem das jeweilige maximale IR-Detektorelement-Ausgangssignal abgegriffen und dem anderen Eingang (21) des Komparators (12) zugeführt wird.

6. Empfangseinrichtung nach einem der Ansprüche 1 bis 5, **dadurch gekennzeichnet, dass** den IR-Detektorelementen (3.i) nachgeschaltete Dioden (14.ia) einer anderen Gruppe mit der Schwellenwertbildungseinheit (11) verbunden sind.

7. Empfangseinrichtung nach einem der Ansprüche 1 bis 6, **dadurch gekennzeichnet, dass** die Schwellenwertbildungseinheit (11) mit einem RC-Glied (16) gebildet ist.

8. Empfangseinrichtung nach einem der Ansprüche 1 bis 7, **dadurch gekennzeichnet, dass** die Schwellenwertbildungseinheit (11) einen Spannungsteiler (18, 19) aufweist, von dem die Schwellenwertspannung dem einen Eingang (22) des Komparators (12) zugeführt wird.

9. Empfangseinrichtung nach einem der Ansprüche 1 bis 8, **dadurch gekennzeichnet, dass** gruppenweise zusammengeschaltete Dioden (14.ia, 14.ib) vorhanden sind.

10. Empfangseinrichtung nach einem der Ansprüche 1 bis 9, **dadurch gekennzeichnet, dass** die Dioden (14.ia, 14.ib) mit ihren Kathoden zusammengeschaltet sind.

## Claims

1. An infrared (IR) receiving device with IR detector elements (3) for receiving IR signals from a communication zone (5), as well as with a processing circuit for deriving electric signals corresponding to the IR signals received, wherein the IR detector elements (3) are provided in at least one matrix-type arrangement (2) which corresponds to a matrix-type segmentation of the communication zone (5), and the processing circuit comprises a maximum detector circuit (9) connected to the IR detector elements (3), which maximum detector circuit (9) selects one respective maximum output signal from among the output signals of the IR detector elements (3) for deriving the electric signal, **characterized in that** a threshold-valve-forming unit (11) is connected to the IR detector elements (3), the output of said unit being connected with an input (22) of a comparator (12), to the other input (21) of which the respective maximum IR detector element output signal is fed, and **in that** at least one diode (14.ib) follows each IR detector element (3.i) for selecting the maximum output signal, wherein said diodes (14.ib) follows said IR detector elements (3.i) are interconnected (15b) with their sides opposing the IR detector elements (3.i).

2. A receiving device according to claim 1, **characterized in that** at least two matrix-type IR detector element arrangements (2a, 2b) are present, the positions of the IR detector elements (3) being offset relative to each other from arrangement to arrangement.

3. A receiving device according to claim 1, **characterized in that** the IR detector elements (3) are provided in a chessboard-type arrangement, with their active detector surfaces being substantially consecutively arranged without gaps.

4. A receiving device according to any one of claims 1 to 3, **characterized in that** a common imaging lens (4) is arranged in front of the or each IR detector element arrangement (2).

5. A receiving device according to any one of claims 1 to 4, **characterized in that** the diodes, or the diodes, (14.ib) of one group, respectively, are connected to a common resistor (20) from which the respective maximum IR detector element output signal can be taken and supplied to the other input (21) of the comparator (12).

6. A receiving device according to any one of claims 1 to 5, **characterized in that** diodes (14.ia) of another group following the IR detector elements (3.i) are connected to the threshold-value-forming unit (11).

7. A receiving device according to any one of claims 1 to 6, **characterized in that** the threshold-value-forming unit (11) is formed by an RC unit (16).

8. A receiving device according to any one of claims 1 to 7, **characterized in that** the threshold-value-forming unit (11) comprises a voltage divider (18, 19) from which the threshold-value-voltage is supplied to the one input (22) of the comparator (12).

9. A receiving device according to any one of claims 1 to 8, **characterized in that** diodes (14.ia, 14.ib) interconnected in groups are provided.

10. A receiving device according to any one of claims 1 to 9, **characterized in that** the diodes (14.ia, 14.ib) are interconnected with their cathodes.

## Revendications

1. Dispositif de réception infrarouge comportant des éléments de détection IR (3) pour recevoir des signaux IR depuis une zone de communication (5) ainsi qu'un circuit de traitement pour la provenance de signaux électriques correspondant aux signaux IR reçus, dans lequel les éléments de détection IR (3) sont disposés en au moins un agencement matriciel (2), qui correspond à une segmentation matricielle de la zone de communication (5), et le circuit de traitement présente un circuit de détection de valeur maximale (9) relié aux éléments de détection IR (3), qui sélectionne un signal de sortie maximal respectif pour la provenance du signal électrique, **caractérisé en ce qu'**aux éléments de détection IR (3) est reliée une unité de formation de valeur de seuil (11), dont la sortie est reliée à l'entrée (22) d'un comparateur (12), à l'autre entrée (21) duquel est placé le signal de sortie de l'élément de détection IR maximal respectif, **en ce qu'**à chaque élément de détection IR (3.i), au moins une diode (14.ib) est placée en aval pour sélectionner le signal de sortie maximal, où ces diodes (14.ib) placées en aval des éléments de détection IR (3.i) sont connectées (15b) par leurs côtés opposés aux éléments de détection IR (3.i).

2. Dispositif de réception selon la revendication 1, **caractérisé en ce qu'**au moins deux agencements d'éléments détecteurs IR matriciels (2a, 2b) existent, où les positions des éléments de détection IR (3) sont décalées l'une par rapport à l'autre d'agencement en agencement.

3. Dispositif de réception selon la revendication 1, **caractérisé en ce que** les éléments de détection IR (3) sont présents dans un agencement sous forme d'échiquier, reliés les uns aux autres sensiblement sans fil par leurs surfaces de détection actives.

4. Dispositif de réception selon l'une des revendications 1 à 3, **caractérisé en ce qu'**une lentille de reproduction commune (4) est disposée avant l'agencement d'éléments de détection IR (2).

5. Dispositif de réception selon l'une des revendications 1 à 4, **caractérisé en ce que** les diodes ou les diodes (14.ib) d'un groupe sont reliées par une résistance commune (20), par laquelle le signal de sortie des éléments détecteurs IR maximal respectif est prélevé et délivré à l'autre entrée (21) du comparateur (12).

6. Dispositif de réception selon l'une des revendications 1 à 5, **caractérisé en ce que** les diodes (14.ia) d'un autre groupe placées en aval des éléments de détection IR (3.i) sont reliées à l'unité de formation de valeur de seuil (11).

7. Dispositif de réception selon l'une des revendications 1 à 6, **caractérisé en ce que** l'unité de formation de valeur de seuil (11) est formé par un élément RC (16).

8. Dispositif de réception selon l'une des revendications 1 à 7, **caractérisé en ce que** l'unité de formation de valeur de seuil (11) présente un diviseur de tension (18, 19), qui délivre la tension de valeur de seuil à l'entrée (22) du comparateur (12).

9. Dispositif de réception selon l'une des revendications 1 à 8, **caractérisé en ce qu'**il existe des diodes (14.ia, 14.ib) interconnectées par groupe.

10. Dispositif de réception selon l'une des revendications 1 à 9, **caractérisé en ce que** les diodes (14.ia, 14.ib) sont interconnectées par leurs cathodes.
